# EUROPEAN PATENT SPECIFICATION

(11) **EP 2 165 915 B1**
(45) Date of publication and mention of the grant of the patent: **12.06.2024**
(21) Application number: 09171048.3
(22) Date of filing: 23.09.2009
(51) Int. Cl.: B61L 23/04, B61K 9/08, G01B 11/25, G01B 11/26, G01B 11/30

(54) **Monitoring a turnout of a railway or tramway line**
Überwachung einer Weiche von Eisenbahn- und Straßenbahnlinien
Surveillance de l'aiguillage d'une voie ferrée et ligne de tramway

(30) Priority: 23.09.2008 NL 2002013; 22.09.2009 NL 2003527
(43) Date of publication of application: 24.03.2010
(60) Divisional application: 21217767.9
(73) Proprietor: Goldschmidt Holding GmbH, 04109 Leipzig (DE); Przedsiebiorstwo Uslugowo-Techniczne GRAW Sp. z o.o., 44-100 Gliwice (PL)
(72) Inventor: Schoone, Clemens, 4131 NJ, Vianen (NL)

(56) References cited:
- EP-A1- 1 548 400
- WO-A1-01/86227
- WO-A1-98/33038
- WO-A1-2005/098352
- WO-A2-2008/008611
- US-A1- 2009 073 428

## Description

This invention relates to an apparatus and method for monitoring wear and deformation of a turnout (also called switch and crossing) of a railway or tramway line.

A turnout is known to undergo wear and deformation with use, which must be corrected from time to time by e.g. grinding or replacement. The correct moment for maintenance is generally determined by periodic measurements of the parameters of one or more components of the turnout, such as rails, by using contact or non-contact sensors, e.g. laser measurement known as triangulation.

The wear or deformation of a turnout is rather irregular and typically concentrates on particular locations, such as the stock rails, wing rails, check rails, point blades, frog and crossing. The inventors have found out that for proper monitoring the measurement must be accurately associated with its location along the turnout.

The document WO 01/86221 A1 discloses an apparatus for monitoring the rails of a railway line.

An object of the invention is one or more of the following: to measure the wear or deformation of the turnout; to measure parameters of a component, such as rail, without any mechanical contact with the component and without the need to use mechanical centering devices; to acquire information relating to the actual profile of the component, its degree of wear and its vertical and transverse deformation; to be able to accurately determine the location of the measurements, particularly relative to a reference point; to effect the measurements while insensitive to oscillation and deformation of the vehicle to which the apparatus is mounted; to obtain desired results from measurements in real time; to be able to conduct the measurements at a high velocity of at least 10 or 20 km/hr of the measuring train.

To this end, the invention provides an apparatus an apparatus according to claim 1 and a method according to claim 10.

The TMS (Turnout Measuring System), BDS (Blade Detection System) and/or PMS (Profile Measuring System) are preferably mounted to a railway vehicle.

The PMS is designed to operate in at least two operating modes; a first mode with low detection rate or sampling rate and a second mode with high detection rate or sampling rate, and has switching means to switch between said two operating modes, which switching means are controlled by a controlling unit which receives information about the location of the TMS along the track, which location information is e.g. provided by GPS or a similar wireless operating positioning system. Thus, remote from the turnout of interest, the switching means are switched such that the PMS operates with low detection rate or sampling rate and when the TMS comes closer to said turnout, the switching means are switched such that the PMS operates with high detection rate or sampling rate such that the rail profile or other part of interest of the turnout is detected more accurate compared to the railway remote from the turnout.

Preferably the BDS is designed such that it is only switched on if at or close to a turnout and otherwise is switched off. This switching is carried out by switching means connected to a controlling unit which receives information about the location of the TMS along the track, which location information is e.g. provided by GPS or a similar wireless operating positioning system. Thus, while coming closer to a turnout the switching means are switched such that the BDS is switched on and when the TMS has passed the turnout or the location of interest of the turnout to be detected by the BDS, the BDS is switched off.

Preferably the TMS is designed such that the sampling or detection action of the PMS is automatically synchronised with the event that the BDS detects the location of interest of the turnout, e.g. the reference point. In a preferred embodiment this means that the sampling rate of the PMS is modified as soon as the reference point is detected by the BDS. As an example, the sampling rate of the PMS is constant and provides a measurement with e.g. 300 millimeter spacing. When the reference point is detected by the BDS, the control unit commands the PMS to change, e.g. temporarily increase or decrease, the sampling rate such that the next sample is taken within 5 millimeters from the reference point. After that the sampling rate of the PMS is typically brought back to the sampling rate applied just before detection of said reference point (in this example 300 millimeter spacing). Thus, at all times the PMS takes a sample within a distance from the reference point of 15 or 10 or 5 millimeter at the most while the sampling rate of the PMS immediately before arriving at the reference point is such that the sampling spacing along the track is at least 50 or 100 millimeter while typically said spacing immediately after said sample is taken at the reference point, is also at least 50 or 100 millimeter.

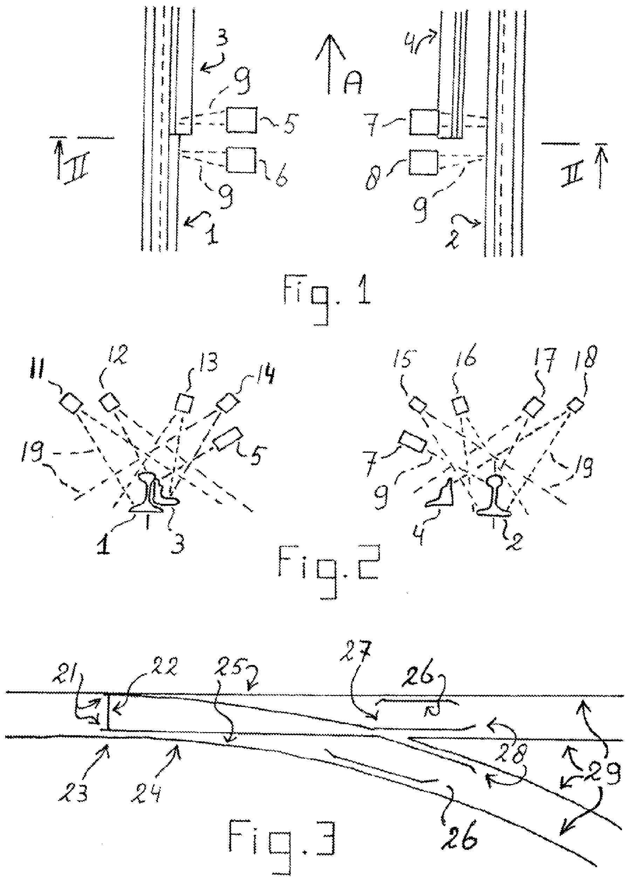

The BDS contains laser sensors which preferably operate according to the laser triangulation method, preferably at least one for each opposite rail of the turnout. In an embodiment there are four fixed laser triangulation (LT) sensors (see fig. 1). Two LT sensors, 5 and 6, are assigned to the one (left) stock or running rail. The other two LT sensors 7 and 8, are assigned to the opposite (right) stock or running rail. With 3 and 4 the point blades are indicated, which are commonly sideways movable. Point blade 3 is bearing against the left rail to take a passing train wheel over from its associated stock rail, while point blade 4 keeps a distance to the right rail to let the relevant train wheel pass. All sensors are substantially continuously measuring the distance to the inner side of the rail, when activated. The LT sensors are preferably mounted such that their optical axis and associated laser is outwardly directed obliquely downward and perpendicular to the lengthwise direction of the associated rail, such that they monitor the inner side of the rail obliquely from above. In this manner the region of interest, in which the point blade is positioned against the stock rail, is observed (the situation according to the left hand part of fig. 1). The LT sensors are preferably connected to the analogue IO boards of the measuring computer. Their signals are e.g. compared with a threshold value.

Preferably, two LT sensors are assigned to the same rail and are mutually spaced in the longitudinal direction of the rail. Said two LT sensors preferably have a parallel orientation. The PMS is preferably active within the spacing between said two LT sensors. Said spacing is preferably less than 200 or 500 millimeter, e.g. measures substantially 100 mm.

In case of a blade point passage by the apparatus, as illustrated in figure 1, at a particular moment one of the pair wise mounted sensors, 5, will sense the point blade positioned against the stock rail, while the second sensor, 6, is sensing the inner side of the stock rail. This occurrence will cause a sudden significant change in the signal of 5 while the signal of 6 remains virtually unchanged. As a result the differential signal of 5 and 6 changes as well. Hence the usage of the differential signal causes the direction of blade point passage to be irrelevant. In case of passage in the direction opposite to fig. 1 the signal of 6 will first undergo a sudden significant change.

The PMS contains vision modules which preferably operate according to the light sectioning method which is a two dimensional extension of the laser triangulation method. Each vision module is preferably provided with a laser device and a video camera. Preferably each stock or running or different rail is simultaneously scanned by a group of at least three or four vision modules. Thus the apparatus is provided with eight vision modules (two groups of four each) in a preferred embodiment, to simultaneously monitor both opposite rails. The vision modules are preferably mounted such that their laser beams form a single projection plane perpendicular to the longitudinal direction of the associated rail and/or such that they share a common plane on which their laser light is projected.

The mutual position of the vision modules allows for optimal profile reconstruction of the component under examination, e.g. the vision modules, preferably at least one or at least two vision modules, are located at both sides of the associated rail and monitor said rail obliquely from above. Preferably the location transverse to the longitudinal direction of the rail and/or the angle of inclination of the optical axis of the vision modules at the same side of the associated rail mutually differs, preferably by at least 10 or 20 millimeter and 10 or 20 degrees, respectively.

Preferably the field of vision of a vision module has overlapping edges with the field of vision of an adjacent vision module. More preferably, the field of vision of a vision module has only partly overlap, preferably not more than 20% or 50% overlap, with the field of vision of an adjacent vision module at the same (one) side of the associated running or stock or different rail; (and/) or the field of vision of a vision module has substantially complete overlap with the field of vision of an adjacent vision module at the same (other) side of the associated running or stock or different rail.

Preferably the vision modules associated with the one or other running or stock rail provide a common field of vision such that simultaneously the head of the stock or running rail and associated point blade or check rail or wing rail over its complete top and complete sides and a part of the stock or running rail and associated point blade or check rail or wing rail at least 30 or 50 millimeter below the top of the head, such as part of the foot at the bottom of the relevant rail, are scanned. For the point blade this applies preferably both in its position bearing against the stock rail and its position moved to a maximum distance from the stock rail.

The vision modules are preferably connected directly to the frame grabber boards of the measurement computer. In this way images are acquired that are used to calculate the rail profile, particularly of the head and fragments of foot and web. The distance between a vision module and the relevant rail measures between 50 and 750 millimeter, particularly between 200 and 400 millimeter.

Preferably one or more of the following applies: Each LT sensor and vision module is dedicated to a single rail; each LT sensor and vision module has a fixed optical axis; each LT sensor or vision module is designed to operate with a range of optical frequency different from the range of another LT sensor or vision module assigned to the same rail and being part of the same apparatus; the projection plane of the PMS is located exactly in the centre of the spacing between the LT sensors; all sensors are supported by or suspended from a bogy of the measuring train.

Based on the measured rail profiles, one or more of the following parameters are calculated: rail head wear (vertical, horizontal, wear angle); slope of rails; track gauge; guiding rail groove width; width of the crossing nose groove; guiding width; groove width between the switch blade and the reaction rail. In the crossing of a switch there is a relationship between the frog, wing rail and checkrail, which can also be checked by the invention by measuring the gauge.

Preferably there is interaction between BDS and PMS. While advancing towards the front of the turnout, the BDS will first detect the stock rail. On the arrival at the point blade, the BDS senses the blade positioned against the stock rail (see above). As a result of this detection, the BDS produces as a trigger mark for the PMS. With the known distance of x and y millimeter between LT sensors and the cross section plane (cross section line), combined with the known measuring characteristics of both systems, it is possible to relate the correct cross sectional profile, as obtained by the PMS, to the trigger mark (which represents the point blade).

Preferably, the signals from BDS and PMS are entered into a computer, to which BDS and PMS are connected.

A non-limiting, preferred embodiment is shown in the drawing.

Fig. 1 shows in top view the left 3 and right 4 point blades of a turnout and the associated stock rails 1, 2. The apparatus is mounted to the under side of a measuring train (not shown) . Of the BDS, 5 and 7 are positioned 50 millimeter in front of the cross section line (arrows II). 6 and 8 are positioned 50 millimeter behind the cross section line. The cross section line resembles the plane in which the PMS is measuring cross sectional profiles of the rails. The arrow A indicates the direction in which the vehicle moves.

Figure 2 shows in sectional view along line II - II of fig. 1 the BDS and PMS in combination with the rails 1 - 4 of the turnout. The sensors 6 and 8 of the BDS are not visible in this view and would be in the same location in this view as sensors 5 and 7, if the direction of view would be opposite compared to fig. 2. PMS contains two groups of four vision modules 11 - 14 and 15 - 18, respectively, each group being assigned to the left or right side of the turnout. Of each group, two vision modules 11, 12 and 17, 18, respectively, are located to the outer side, directed obliquely downwards and two vision modules 13, 14 and 15, 16, respectively, are located to the inner side of the associated rail 1 and 2, respectively, and are oppositely oriented and directed obliquely downwards.

While advancing towards the turnout, the BDS will first detect the running rails 29. On arrival at the blade points 21, a sudden change in the signal of first 5 or 7 and then 6 or 8 is detected. This change is used as a trigger mark for the PMS. With the known distance of 50 millimeter between the sensors 5 - 8 and the cross section plane (line II - II) and the known measuring frequency of the PMS, it is possible to assign the correct cross sectional profile to the trigger mark, thus representing the blade point as a reference point.

Fig. 3 illustrates the main parts of a turnout: (switch) point blades 21, tie bar 22, toe 23, heel 24, stock rails 25, check rails 26, crossing 27, wing rails 28 and running rails 29.

## Claims

1. A turnout measuring system TMS device for the contact less dynamic recording of the profile of a rail (1-4) of a turnout to determine its condition, such as wear or deformation, wherein
at least one light beam from a laser device of a profile measuring system PMS, operating at a predetermined sampling rate, is projected onto the rail and the light reflected from said rail is recorded by an imaging device the signal of which is processed in a computer processor or controlling unit, and **characterised in that**
the location of a reference point (21) at the turnout is detected by a blade detection system BDS, and the sampling rate of the profile measuring system PMS (11-18) is synchronised with the detection event of the reference point by the blade detection system BDS (5-8); and preferably the device has switching means to switch between a high and low sampling rate.

2. A device according to claim 1, wherein the synchronisation is such that at all times the profile measuring system PMS takes a sample within a distance from the reference point of 15 or 10 or 5 millimetre at the most while the sampling rate of the profile measuring system PMS immediately before arriving at the reference point and/or after synchronisation has taken place, is such that the sample spacing along the track is at least 50 or 100 millimetre.

3. A device according to claim 1 or 2, wherein the blade detection system BDS is provided with two distance measuring sensors (5 - 8) with mutual distance in advancing direction and wherein a controlling device is designed to compare the signals from said distance measuring sensors (5 - 8) to decide the reference point detection event.

4. A device according to any of claims 1 - 3, mounted to a railway vehicle and comprising a group of at least three or four vision module sensors (11 - 14; 15 - 18) to simultaneously scan a stock or running or different rail of the track.

5. A device according to claim 4, which vision module sensors (11-14) are mounted such that their laser beams form a single projection plane perpendicular to the longitudinal direction of the associated rail and/or such that they share a common plane on which their laser light is projected.

6. A device according to any of claims 4-5, wherein the vision module sensors (11-14) are located at both sides of the associated rail and monitor said rail obliquely from above; and/or the location transverse to the longitudinal direction of the rail and/or the angle of inclination of the optical axis of the vision module sensors at the same side of the associated rail mutually differs, preferably by at least 10 or 20 millimetre and 10 or 20 degrees, respectively.

7. A device according to any of claims 4-6, wherein the field of vision of a vision module sensor (11-14) has overlapping edges with the field of vision of an adjacent vision module sensor of the same group, preferably the field of vision of said sensor has not more than 20% or 50% overlap, with the field of vision of an adjacent vision module sensor at the same side of the associated rail; and/or the field of vision of a vision module sensor has substantially complete overlap with the field of vision of an adjacent vision module sensor at the same side of the associated running or stock or different rail.

8. A device according to any of claims 4-7, wherein the vision module sensors associated with a rail provide a common field of vision such that simultaneously the head of the rail and associated point blade or check rail or wing rail over its complete top and complete sides extending at least 30 or 50 millimetre below the top of the head, such as part of the foot at the bottom of the relevant rail, are scanned.

9. A device according to any of claims 1-8, wherein the sensors are supported by or suspended from a bogy of the measuring train.

10. A method for the automatic contact less dynamic recording of the profile of a rail (1-4) of a turnout to determine its condition, such as wear or deformation, wherein a measuring train advances along the track, which train is provided with a profile measuring system PMS and wherein during advancement at least one light beam from a laser device of the profile measuring system PMS (11-18), operating at a predetermined sampling rate, is projected onto the rail and the light reflected from said rail is recorded by an imaging device the signal of which is processed in a computer processor or controlling unit, and **characterised in that**
the sampling rate of the profile measuring system PMS is substantially changed, preferably increased, in the neighbourhood of a reference point (21) of said rail, and, preferably,
the speed of the measuring train equals at least 10 or 20 or 50 km/hr.

11. A method according to claim 10, wherein the measuring train is further provided with a blade detection system BDS, and wherein during riding the location of the reference point at the rail is detected by the blade detection system BDS (5-8) on the basis of e.g. a substantial change in detected distance.

12. A method according to claim 10 or 11, wherein the sampling rate of the profile measuring system PMS is substantially changed, preferably increased, as a result of detection of the reference point.

## Patentansprüche

1. Weichenmesssystem-, TMS-, Vorrichtung zum berührungslosen dynamischen Aufzeichnen des Profils einer Schiene (1-4) einer Weiche, um deren Zustand, wie etwa Verschleiß oder Verformung, zu bestimmen,
wobei mindestens ein Lichtstrahl von einer Laservorrichtung eines Profilmesssystems, PMS, die mit einer vorgegebenen Abtastrate arbeitet, auf die Schiene projiziert wird, und das Licht, das von der Schiene reflektiert wird, von einer Bildgebungsvorrichtung aufgezeichnet wird, deren Signal in einer Computerprozessor- oder Steuereinheit verarbeitet wird, und **dadurch gekennzeichnet, dass**
die Position eines Referenzpunktes (21) an der Weiche durch ein Zungenerfassungssystem, BDS, erfasst wird und die Abtastrate des Profilmesssystems, PMS, (11-18) mit dem Erfassungsereignis des Referenzpunktes durch das Zungenerfassungssystem, BDS, (5-8) synchronisiert wird; und vorzugsweise die Vorrichtung über Schaltmittel verfügt, um zwischen einer hohen und einer niedrigen Abtastrate umzuschalten.

2. Vorrichtung nach Anspruch 1, wobei die Synchronisation so erfolgt, dass das Profilmesssystem, PMS, zu jedem Zeitpunkt eine Abtastung innerhalb eines Abstands von höchstens 15 oder 10 oder 5 Millimetern zum Referenzpunkt nimmt, während die Abtastrate des Profilmesssystems, PMS, unmittelbar vor dem Erreichen an dem Referenzpunkt und/oder nach erfolgter Synchronisation so erfolgt, dass der Probenabstand entlang der Spur mindestens 50 oder 100 Millimeter beträgt.

3. Vorrichtung nach Anspruch 1 oder 2, wobei das Zungenerfassungssystem, BDS, mit zwei Abstandsmesssensoren (5-8) mit gegenseitigem Abstand in Vorschubrichtung bereitgestellt ist, und wobei eine Steuervorrichtung so ausgelegt ist, dass sie die Signale von den Abstandsmesssensoren (5-8) vergleicht, um das Referenzpunkt-Erfassungsereignis zu bestimmen.

4. Vorrichtung nach einem der Ansprüche 1-3, die an einem Schienenfahrzeug angebracht ist und umfassend eine Gruppe von mindestens drei oder vier Bildanzeigemodulsensoren (11-14; 15-18) zum gleichzeitigen Abtasten einer Lagerschiene oder Fahrschiene oder anderen Schiene des Gleises.

5. Vorrichtung nach Anspruch 4, bei der die Bildanzeigemodulsensoren (11-14) so angebracht sind, dass ihre Laserstrahlen eine einzelne Projektionsebene senkrecht zur Längsrichtung der zugehörigen Schiene bilden und/oder dass sie eine gemeinsame Ebene teilen, auf die ihr Laserlicht projiziert wird.

6. Vorrichtung nach einem der Ansprüche 4-5, wobei die Bildanzeigemodulsensoren (11-14) auf beiden Seiten der zugehörigen Schiene angeordnet sind und die Schiene schräg von oben überwachen; und/oder die Position quer zur Längsrichtung der Schiene und/oder der Neigungswinkel der optischen Achse der Bildanzeigemodulsensoren auf derselben Seite der zugehörigen Schiene voneinander abweichen, vorzugsweise jeweils um mindestens 10 oder 20 Millimeter und 10 oder 20 Grad.

7. Vorrichtung nach einem der Ansprüche 4-6, wobei das Sichtfeld eines Bildanzeigemodulsensors (11-14) mit dem Sichtfeld eines benachbarten Bildanzeigemodulsensors derselben Gruppe überlappende Ränder aufweist, wobei vorzugsweise das Sichtfeld des Sensors nicht mehr als 20 % oder 50 % Überlappung mit dem Sichtfeld eines benachbarten Bildanzeigemodulsensors auf derselben Seite der zugehörigen Schiene aufweist; und/oder das Sichtfeld eines Bildanzeigemodulsensors im Wesentlichen vollständige Überlappung mit dem Sichtfeld eines benachbarten Bildanzeigemodulsensors auf derselben Seite der zugehörigen Fahrschiene oder Lagerschiene oder anderen Schiene aufweist.

8. Vorrichtung nach einem der Ansprüche 4-7, wobei die Bildanzeigemodulsensoren, die einer Schiene zugeordnet sind, ein gemeinsames Sichtfeld bereitstellen, so dass gleichzeitig der Schienenkopf und die zugehörige Zungen- oder Radlenker- oder Flügelschiene über ihre gesamte Oberseite und die gesamten Seiten, die sich mindestens 30 oder 50 Millimeter unterhalb der Oberseite des Kopfes erstrecken, wie etwa ein Teil des Fußes am unteren Ende der betreffenden Schiene, abgetastet werden.

9. Vorrichtung nach einem der Ansprüche 1-8, wobei die Sensoren von einem Drehgestell des Messzuges getragen werden oder daran aufgehängt sind.

10. Verfahren zum automatischen berührungslosen dynamischen Aufzeichnen des Profils einer Schiene (1-4) einer Weiche, um deren Zustand, wie etwa Verschleiß oder Verformung, zu bestimmen, wobei ein Messzug entlang des Gleises fährt, der mit einem Profilmesssystem, PMS, bereitgestellt ist, und wobei während der Vorwärtsbewegung mindestens ein Lichtstrahl von einer Laservorrichtung des Profilmesssystems, PMS, die mit einer vorgegebenen Abtastrate arbeitet, auf die Schiene projiziert wird, und das Licht, das von der Schiene reflektiert wird, von einer Bildgebungsvorrichtung aufgezeichnet wird, deren Signal in einer Computerprozessor- oder Steuereinheit verarbeitet wird, und **dadurch gekennzeichnet, dass**
die Abtastrate des Profilmesssystems, PMS, in der Nähe eines Referenzpunktes (21) der Schiene wesentlich verändert wird, vorzugsweise erhöht wird, und vorzugsweise die Geschwindigkeit des Messzuges mindestens 10 oder 20 oder 50 km/h beträgt.

11. Verfahren nach Anspruch 10, wobei der Messzug ferner mit einem Zungenerfassungssystem, BDS, bereitgestellt ist, und wobei während der Fahrt die Position des Referenzpunktes an der Schiene durch das Zungenerfassungssystem, BDS, (5-8) beispielsweise anhand einer wesentlichen Änderung des erfassten Abstands erfasst wird.

12. Verfahren nach Anspruch 10 oder 11, wobei die Abtastrate des Profilmesssystems, PMS, infolge der Erfassung des Referenzpunktes wesentlich verändert wird, vorzugsweise erhöht wird.

## Revendications

1. Un dispositif TMS à système de mesure de branchement pour l'enregistrement dynamique sans contact du profil d'un rail (1-4) d'un branchement pour évaluer son état, tel qu'une usure ou une déformation, dans lequel
au moins un faisceau lumineux émis par un dispositif laser d'un système de mesure de profil PMS, fonctionnant à une cadence d'échantillonnage prédéterminée, est projeté sur le rail et la lumière réfectée par ledit rail est enregistrée par un dispositif d'imagerie dont le signal est traité dans un processeur d'ordinateur ou une unité de commande, et
**caractérisé en ce que**
la position d'un point de référence (21) au niveau du branchement est détectée par un système de détection de lame BDS, et la cadence d'échantillonnage du système de mesure de profil PMS (11-18) est synchronisée avec l'événement de détection du point de référence par le système de détection de lame BDS (5-8); et de préférence,
le dispositif comporte des éléments de commutation permettant de basculer entre une cadence d'échantillonnage élevée et faible.

2. Un dispositif selon la revendication 1, dans lequel la synchronisation est telle que le système de mesure de profil PMS prélève constamment un échantillon à une distance du point de référence de 15 ou 10 ou 5 millimètres au plus, tandis que la cadence d'échantillonnage du système de mesure de profil PMS juste avant d'arriver au point de référence et/ou après que la synchronisation ait été effectuée, est telle que l'intervalle d'échantillonnage le long de la voie est d'au moins 50 ou 100 millimètres.

3. Un dispositif selon la revendication 1 ou 2, dans lequel le système de détection de lames BDS est pourvu de deux capteurs mesurant la distance (5 - 8) ayant une distance mutuelle dans la direction de progression et dans lequel un dispositif de commande est prévu pour comparer les signaux émis par desdits capteurs mesurant la distance (5 - 8) de manière à déterminer l'événement de détection du point de référence.

4. Un dispositif selon l'une quelconque des revendications 1 à 3, fixé sur un véhicule ferroviaire et comprenant un groupe d'au moins trois ou quatre capteurs de module de vision (11 - 14; 15 - 18) pour analyser simultanément un stock ou un rail de roulement ou un rail différent de la voie.

5. Un dispositif selon la revendication 4, dans lequel des capteurs de module de vision (11-14) sont fixés de telle sorte que leurs faisceaux laser forment un plan de projection unique perpendiculaire par rapport à la direction longitudinale du rail associé et/ou de telle sorte qu'ils partagent un plan commun sur lequel leur lumière laser est projetée.

6. Un dispositif selon l'une quelconque des revendications 4-5, dans lequel les capteurs de module de vision (11-14) sont positionnés des deux côtés du rail associé et évaluent ledit rail de manière oblique depuis le dessus; et/ou l'emplacement transversal à la direction longitudinale du rail et/ou l'angle d'inclinaison de l'axe optique des capteurs de module de vision du même côté du rail associé varient mutuellement, de préférence d'au moins 10 ou 20 millimètres et 10 ou 20 degrés, respectivement.

7. Un dispositif selon l'une quelconque des revendications 4 à 6, dans lequel le champ de vision d'un capteur de module de vision (11-14) a des bords qui se chevauchent avec le champ de vision d'un capteur de module de vision adjacent du même groupe, de préférence le champ de vision dudit capteur n'a pas plus de 20 % ou 50 % de chevauchement, avec le champ de vision d'un capteur de module de vision adjacent du même côté du rail associé; et/ou le champ de vision d'un capteur de module de vision a un chevauchement substantiellement complet avec le champ de vision d'un capteur de module de vision adjacent du même côté du rail de roulement ou du stock ou d'un rail différent associés.

8. Un dispositif selon l'une quelconque des revendications 4 à 7, dans lequel les capteurs de module de vision associés à un rail fournissent un champ de vision commun de telle sorte que simultanément la tête du rail et la lame d'aiguille associés ou le contre-rail ou la patte de lièvre sur le dessus complet et les côtés complets s'étendant au moins 30 ou 50 millimètres au-dessous de la tête, telle qu'une partie du pied à la base du rail concerné, sont analysés.

9. Un dispositif selon l'une quelconque des revendications 1 à 8, dans lequel les capteurs sont maintenus ou suspendus à un bogie du train de mesure.

10. Un procédé d'enregistrement dynamique automatique sans contact du profil d'un rail (1-4) d'un branchement pour évaluer son état, tel qu'une usure ou une déformation, dans lequel un train de mesure avance le long de la voie, ledit train est pourvu d'un système de mesure de profil PMS et dans lequel pendant la progression, au moins un faisceau lumineux émis par un dispositif laser du système de mesure de profil PMS (11-18), fonctionnant à une cadence d'échantillonnage prédéterminée, est projeté sur le rail et la lumière réfectée par ledit rail est enregistrée par un dispositif d'imagerie dont le signal est traité dans un processeur d'ordinateur ou une unité de commande, et **caractérisé en ce que**
la cadence d'échantillonnage du système de mesure de profil PMS est sensiblement modifiée, de préférence augmentée, au voisinage d'un point de référence (21) dudit rail, et, de préférence, la vitesse du train de mesure est d'au moins 10 ou 20 ou 50 km/h.

11. Un procédé selon la revendication 10, dans lequel le train de mesure est en outre pourvu d'un système de détection de lame BDS, et dans lequel, pendant la conduite, la position du point de référence sur le rail est détectée par le système de détection de lame BDS (5-8) sur la base, par exemple, d'une modification substantielle de la distance détectée.

12. Un procédé selon la revendication 10 ou 11, dans lequel la cadence d'échantillonnage du système de mesure de profil PMS est considérablement modifiée, de préférence augmentée, conséquemment à la détection du point de référence.
